(19) Europäisches Patentamt
European Patent Office
Office européen des brevets

(11) **EP 1 800 964 B1**

(12) **EUROPEAN PATENT SPECIFICATION**

(45) Date of publication and mention
of the grant of the patent:
**17.03.2010 Bulletin 2010/11**

(51) Int Cl.:
**B60R 21/015** (2006.01)    **G06K 9/00** (2006.01)

(21) Application number: **06077250.6**

(22) Date of filing: **14.12.2006**

(54) **Method of depth estimation from a single camera**

Verfahren zur Tiefenschätzung von einer Einzelkamera aus

Procédé d'estimation de la profondeur d'une seule caméra

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **23.12.2005 US 318294**

(43) Date of publication of application:
**27.06.2007 Bulletin 2007/26**

(73) Proprietor: **Delphi Technologies, Inc.
Troy, Michigan 48007 (US)**

(72) Inventor: **Kisacanin, Branislav
Kokomo, IN 46902 (US)**

(74) Representative: **Denton, Michael John et al
Delphi France SAS
64 Avenue de la Plaine de France
ZAC Paris Nord II
B.P. 65059, Tremblay en France
95972 Roissy Charles de Gaulle Cedex (FR)**

(56) References cited:
EP-A- 1 049 046       EP-A2- 1 033 290
WO-A-03/059697       WO-A-03/066386
WO-A-2004/101325     US-A1- 2003 079 929
US-A1- 2004 085 448   US-A1- 2004 153 229

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The invention relates to an occupant monitoring system for an automobile.

BACKGROUND OF THE INVENTION

Monitoring the position of occupants in a vehicle has become a valuable tool for improving automobile safety. Information such as occupant seating position and head position may be used with other vehicle safety features such as the vehicle airbag to reduce the chance of injury during an accident. Currently, multiple cameras are positioned within the passenger compartment of the vehicle to monitor the occupants. Data gathered from the images captured by the cameras is continuously analyzed to track occupant position and movement.

One exemplary device is disclosed in U.S. Patent Application Publication No. 2004/0085448, which teaches a vehicle occupant detection system for acquiring digital images of a region containing a vehicle seat and processing the images to detect occupant status of the seat, wherein the images are photographed by infrared light using a camera and an infrared light protection apparatus, each located above and ahead of the seat location. Another exemplary device is disclosed in European Patent Reference EP 1 033 290 A2, which teaches an IR occupant position detection system that utilizes a two-dimensional array of IR emitters that are selectively activated to periodically illuminate two or more predetermined planes in the vicinity of a passenger seating area, wherein the reflected IR energy is detected by photosensitive receiver and analyze to detect the presence of the occupant to classify the occupant, and to identify and dynamically track the position of the occupant's head/torso relative to predefined zones of the passenger compartment. Yet another exemplary device is disclosed in International Publication No. WO 03/059697 A1, which teaches a camera arrangement mounted on a motor vehicle to detect a human, wherein an output from the camera is processed by a processor to identify any area or areas of the captured image which have a specific spectral content representative of human skin, so that the processor may determine the position of any identified area within the image and it may control or modify the actuation of one or more safety devices. Another exemplary device is disclosed in U.S. Patent Application Publication No. 2004/0153229, which teaches a sensor system that determines a deployment level of an air bag in a vehicle, wherein a light source of the sensor system emits light onto a region around a vehicle seat and an array of light-sensitive pixels, which capture reflected light from the scene including reflected light that originated from the light source, such that the reflected light is processed to determines depth information for an object in a scene based on a time-of-flight characteristic of the reflected light from the light source captured on the array. Yet another exemplary device is disclosed in U.S. Patent Application Publication No. 2003/0079929, which teaches an apparatus for detecting a head of an occupant in a seat within a vehicle that includes an area image sensor for periodically taking an image of an area including an occupant in the seat, and outputting signals sequentially representing 1-frame images of the area, wherein a head Position calculating section operates for deciding a position or a head of the occupant on the basis of the 1-frame images sequentially represented by the signal outputted by the area image sensor.

SUMMARY OF THE INVENTION

One embodiment of the present invention includes an occupant monitoring system for monitoring a position of an occupant's head in an automobile, the system comprising at least one light source positioned to provide light to illuminate a portion of the passenger's head, a camera spaced apart from the light source, the camera being positioned to capture an image of the light illuminating the occupant's head and output a signal corresponding to the image, and a processor configured to receive the signal and determine the position of the occupant's head relative to the camera based on the illuminated portion of the occupant's head in the image.

Another embodiment of the present invention includes a method of determining the position of an occupant's head in an automobile, the method including the steps of providing at least one light source, a camera, and a processor, actuating the light source to illuminate a portion of the occupant's head, actuating the camera to capture an image including the occupant's head and the illuminated portion of the occupant's head and output a signal corresponding to the image, determining the position of the occupant's head relative to the camera based on a position of the illuminated portion of the occupant's head in the image.

Another embodiment of the present invention includes a driver monitoring system for an automobile for determining a head position of the driver of the automobile, the monitoring system including an illuminator positioned to illuminate a portion of the driver's head, a camera spaced apart from the illuminator, the camera positioned to capture an image of the driver's head and the illuminated portion of the driver's head, the image including a vertical axis and a horizontal axis, and a processor configured to analyze the image and determine a distance of the driver's head from the camera by determining a measurement along the vertical axis of the illuminated portion of the driver's head in the image and inputting it into an empirically determined equation.

BRIEF DESCRIPTION OF THE DRAWINGS

The above-mentioned and other features and objects of this invention, and the manner of attaining them, will become more apparent and the invention itself will be better understood by reference to the following description of embodiments of the invention taken in conjunction with the accompanying drawings, wherein:

Fig. 1 is a diagram illustrating the components of one embodiment of an occupant monitoring system;
Fig. 2 is an example of an image captured by a camera of the occupant monitoring system;
Fig. 3 is an example of another image captured by a camera of the occupant monitoring system;
Fig. 4 is an example of another image captured by a camera of the occupant monitoring system;
Fig. 5 is an example of another image captured by a camera of the occupant monitoring system;
Fig. 6 is an example of another image captured by a camera of the occupant monitoring system;
Fig. 7 is an example of another image captured by a camera of the occupant monitoring system;
Fig. 8 is an example of another image captured by a camera of the occupant monitoring system; and
Fig. 9 is a chart comparing the true distance of the occupant from the camera with a calculated distance of the occupant from the camera.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

DESCRIPTION OF THE PREFERRED EMBODIMENTS

The embodiments discussed below are not intended to be exhaustive or limit the invention to the precise forms disclosed in the following detailed description. Rather, the embodiments are chosen and described so that others skilled in the art may utilize their teachings.

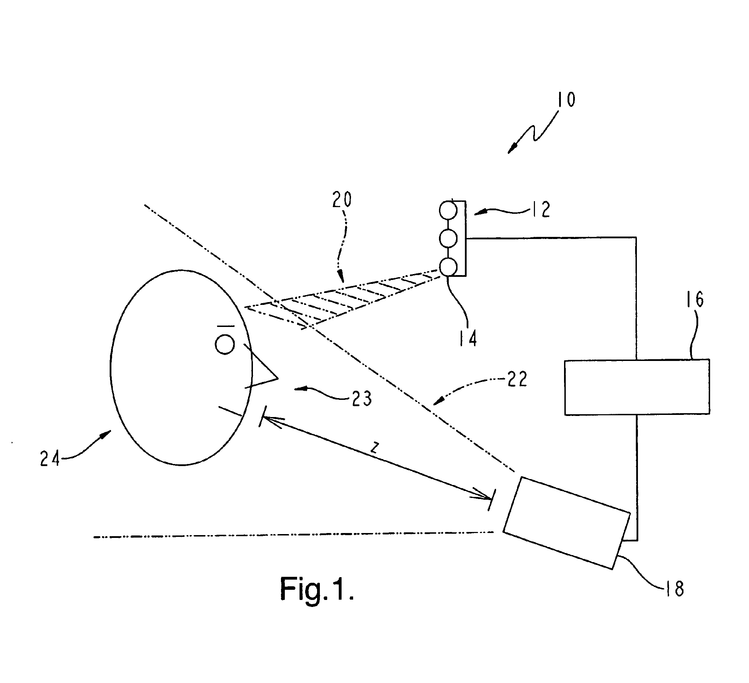

An occupant monitoring system 10 for determining the position of an occupant's head 24 in an automobile is shown in Fig. 1. Occupant monitoring system 10 includes camera 18, light source 12, and processor 16. In this embodiment, occupant monitoring system 10 determines the distance Z between the occupant's face 23 and camera 18. As discussed above, distance Z may be used along with a variety of other measurements to determine characteristics such as the location and position of occupant's head 24. In other embodiments, occupant monitoring system 10 may be used to determine the position of the torso of the occupant or any other suitable object. In this exemplary embodiment, system 10 is positioned on the driver's side of the automobile and is configured to monitor the position of the driver's head.

In this embodiment, light source 12 includes an emitter 14. Emitter 14 of light source 12 emits a band of light 20 that is projected onto face 23 of occupant's head 24. Light source 12 may include a bank of infrared (IR) light emitting diodes (LEDs), a laser diode, or any other suitable light source. In this embodiment, emitter 14 emits light 20 in only a single plane, or close to it, defined by a point and a line. The point is the location of emitter 14 and the line is a horizontal line parallel to the left-right direction in the automobile at an elevation such that the line passes thru the center of face 23 of occupant's head 24 when occupant's head 24 is positioned in the nominal position. The nominal head position is defined by the head location of an average-height driver in a standard car-driving pose, looking forward, head close to or against the head rest. The narrow band of light 20 may be produced by providing an opaque mask (not shown) positioned on emitter 14.

Camera 18 periodically captures an image of face 23 of occupant's head 24 and provides a signal corresponding to the image to processor 16. Camera 18 may include an IR camera, a laser-detecting camera, or any other camera configured to capture light emitted from light source 12. In this embodiment, camera 18 captures images of objects positioned in field of view 22 projected from camera 18.

In this embodiment, processor 16 is coupled to both camera 18 and light source 12. Processor 16 controls emitter 14 and camera 18 to determine distance Z. In operation, processor 16 actuates emitter 14 to project band of light 20 onto face 23 of occupant's head 24. At the same time, processor 16 actuates camera 18 to capture and image of face 23 which is illuminated by band of light 20. The image is then sent from camera 18 to processor 16. Processor 16 may be programmed to capture an image periodically such as every one-third of second. Processor 16 then determines distance Z using the methods described below and outputs this data to other systems on the automobile and/or performs other calculations using the data.

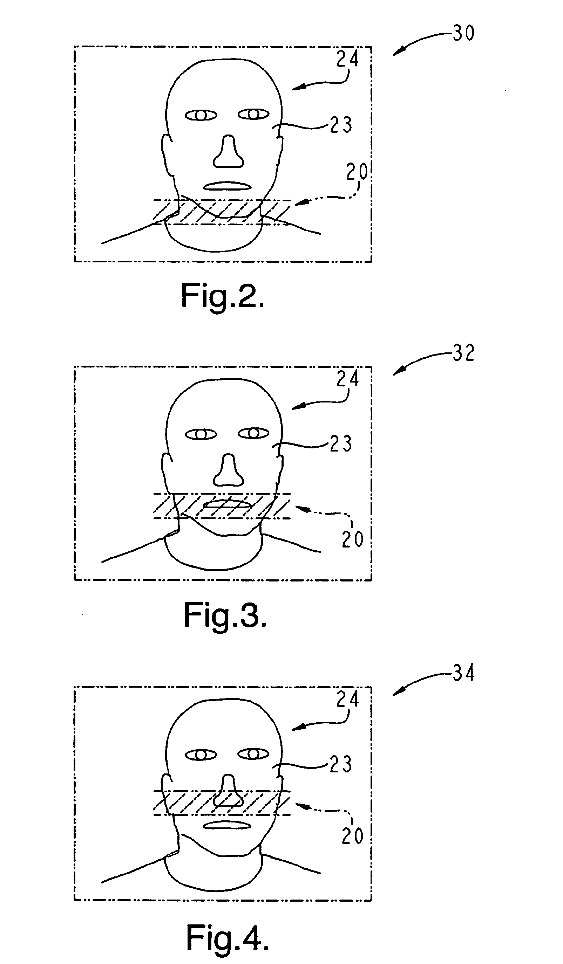

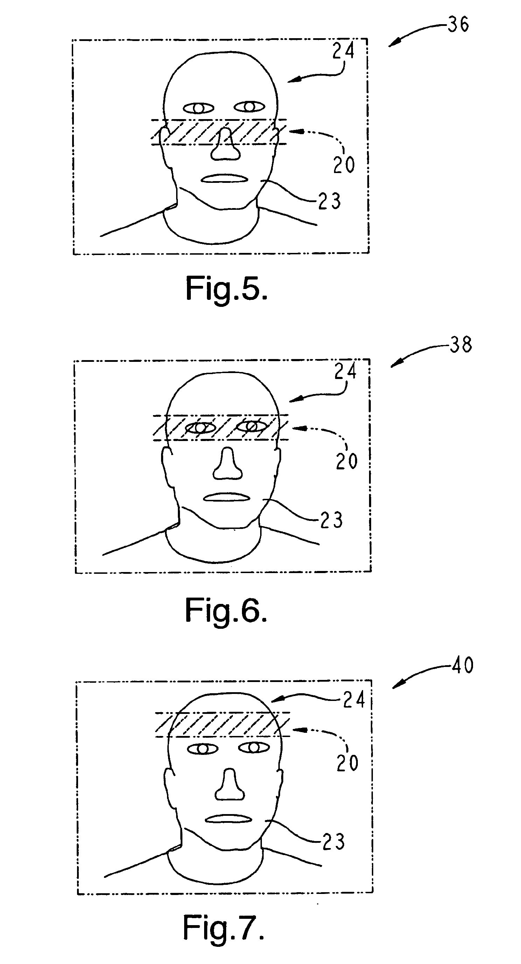

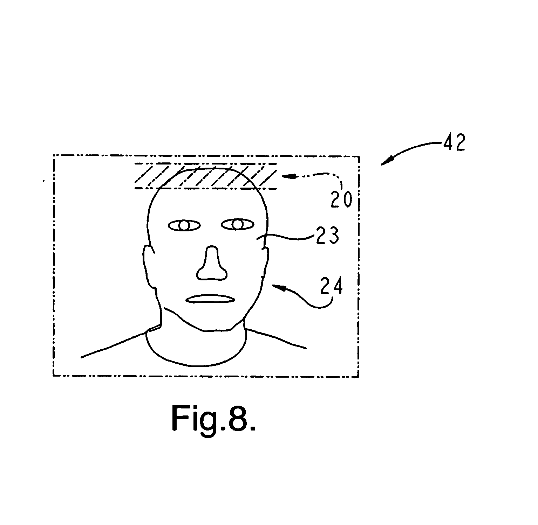

Examples of images captured by camera 18 are shown in Figs. 2-8. In image 30, shown in Fig. 2, the majority of the image includes face 23 of occupant's head 24. Band of light 20 is shown as the shaded area, however in the actual image, band of light 20 may be a brightened or illuminated area. In image 30, band of light 20 illuminates a chin area of face 23 and appears in a lower portion of image 30. As shown in images 32, 34, 36, 38, 40, and 42 in Figs. 3-8, the shaded area corresponding to band of light 20 appears at progressively higher positions in the aforementioned images. Processor 16 determines distance Z between face 23 of occupant's head 24 and camera 18 by measuring the vertical height or distance of the appearance of band of light 20 in images captured by camera 18. For example, when occupant's head 24 is present in the image such as images 30 and 42, the appearance of band of light 20 appears higher such as image 42 or lower such as image 30, depending on distance Z between face 23 of occupant's head 24 and camera 18. The higher the appearance of light band 20 in the image indicates a smaller distance Z. An angle (not shown) between band or plane of light 20 (in Fig. 1) and the central axis of field of view 22 of camera 18 translates changes in distance Z into changes of the vertical position of the appearance of band of light 20 (in Fig. 2) in the images captured by camera 18. In this embodiment the angle between the band of light 20 and the central axis of field of view 22 of camera 18 is generally greater than 10 degrees.

To determine the vertical distance of the appearance of the band of light 20 in the images captured by camera 18, imaging such as binarizing the images and determining the center of mass of bright area corresponding to band of light 20 in the image may be used by processor 16. The center of mass of the bright area of each image is positioned at a distance of Y pixels from the upper or lower edge of the image. A linear model such as Equation 1, shown below, may be used by processor 16 to relate distance Z and vertical pixel distance Y.

$$Z = K * Y + N \qquad\qquad (Eq. 1)$$

The constants K and N may be determined from the physical dimensions of the automobile and occupant monitoring system 10 or by conducting experimental testing in which distance Z is measured for several different values of Y. The experiment data may then be input into the classical Least Squares method to determine constants K and N or used to create a look up table. Examples of other models that may be used to determine constants K and N include using a piecewise linear model and applying classical Least Squares to each piece and Nonlinear Least Squares.

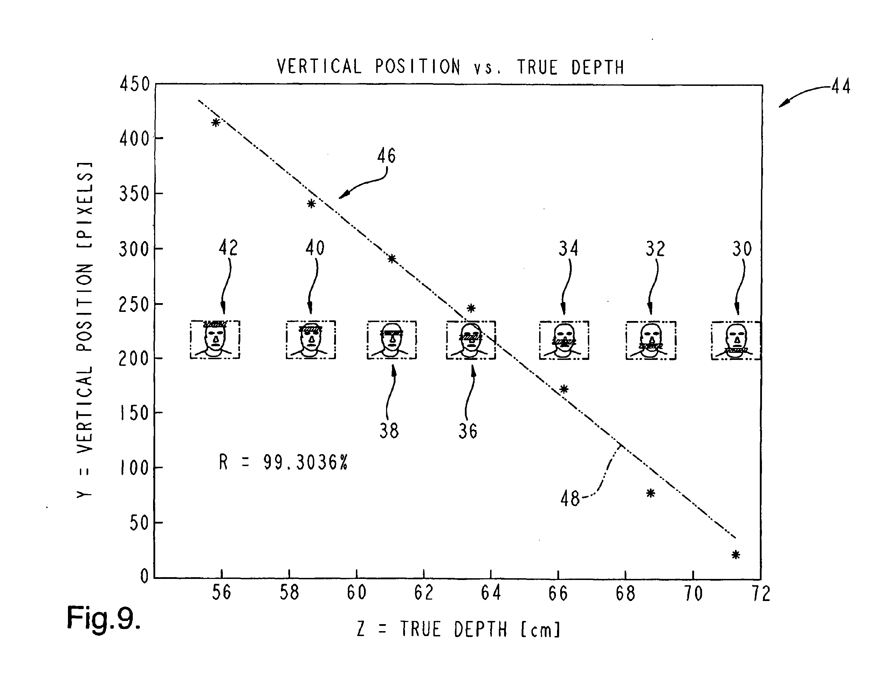

Fig. 9 includes chart 44 depicting experimental data from testing in which distance Z was measured for seven different values of Y. Chart 44 illustrates the vertical pixel position or distance Y on the y-axis and the true depth or measured distance Z between camera 18 and face 23 of occupant's head 24 in centimeters. Data set 46 includes an illustration of the corresponding images 42, 40, 38, 36, 34, 32, and 30, discussed above, indicating the vertical position of the appearance of band of light 20 in the respective images. Trend line 48 was determined for data set 46 having a relatively high R value (99.3036%) indicating that relationship between Y and Z is relatively linear. Constants K and N may be calculated using the equation corresponding to trend line 48 as an empirical correlation.

**Claims**

1. An occupant monitoring system (10) for monitoring a position of an occupant's head (24) in an automobile, the system comprising at least one light source (12) positioned to provide light (20) to illuminate a portion of the passenger's head (24), a camera (18) spaced apart from the light source (12), the camera (18) being positioned to capture an image (30) of the light (20) illuminating the occupant's head (24) and output a signal corresponding to the image (30); and
   **characterized by**
   a processor (16) configured to receive the signal and determine the position of the occupant's head (24) relative to the camera (18) based on the illuminated portion of the occupant's head (24) in the image (30), such that the processor (16) determines a distance (2) of the occupant's head (24) from the camera (18) by determining a vertical position (Y) of facial features within the illuminated portion (20) of the occupant's head (24) in the image (30) and comparing these facial features to one of an empirical correlation, experimental data, and a look-up table .

2. The occupant monitoring system (10) of claim 1, wherein the at least one light source (12) is an infrared light emitting diode (LED).

3. The occupant monitoring system (10) of claim 1, wherein the at least one light source (12) is a laser diode.

4. The occupant monitoring system of (10) claim 1, wherein the light (20) produced by the light source (12) is defined by a horizontal line projected across an occupant's face (23).

5. The occupant monitoring system (10) of claim 1, wherein automobile includes a driver's side and a passenger side, the occupant monitor system (10) being positioned on the driver's side of the automobile and configured to monitor the position of a driver's head (24).

6. The occupant monitoring system (10) of claim 1, wherein the camera (18) is positioned along a first axis and the light source (12) is positioned along a second axis, the first axis positioned at angle equal to at least 10 degrees relative to the second axis.

7. The occupant monitoring system (10) of claim 1, wherein the image (30) includes a vertical axis and a transverse axis, the processor (16) being configured to analyze the image (30) and determine a position on the vertical axis corresponding to the illuminated portion of the occupant's head (24).

8. The occupant monitoring system (10) of claim 1, wherein the processor (16) is configured to determine a distance (2) between the camera (18) and the occupant's head (24).

9. A method of determining the position of an occupant's head (24) in an automobile, the method including the steps of providing at least one light source (12), a camera (18), and a processor (16), actuating the light source (12) to illuminate a portion of the occupant's head (24), actuating the camera (18) to capture an image (30) including the occupant's head (24), and the illuminated portion of the occupant's head (24) and output a signal corresponding to the image (30); and
**characterized by**
determining the position of the occupant's head (24) relative to the camera based on a position of the illuminated portion of the occupant's head (24) in the image (30) by determining a vertical position (Y) of facial features within the illuminated portion (20) of the occupant's head (24) in the image (30) and comparing these facial features to one of an empirical correlation, experimental data, and a look-up table.

10. The method of claim 9, wherein the at least one light source (12) is one of an infrared light emitting diode and a laser diode.

11. The method of claim 9, wherein the at least one light source (12) and the camera (18) are controlled by the processor (16).

12. The method of claim 9, wherein the at least one light source (12) is configured to project a horizontally extending band of light onto the occupant's head (24).

13. The method of claim 9, wherein the processor (16) determines the distance of the occupant's head (24) from the camera (18).

14. The method of claim 9, wherein the steps of actuating the light source (12), actuating the camera (18), and determining the position of the occupant's head (24) relative to the camera (18) are repeated in a predetermined time period.

15. The method of claim 14, wherein the predetermined time period is less than one second.

16. The method of claim 9, further comprising the step of adjusting the deployment of an airbag positioned adjacent to the occupant based on the position of the occupant's head (24) determined in the previous step.

**Patentansprüche**

1. Insassenüberwachungssystem (10) zum Überwachen einer Position des Kopfes (24) eines Insassen in einem Automobil, wobei das System aufweist zumindest eine Lichtquelle (12), die positioniert ist, um Licht (20) zu liefern, um einen Teil des Kopfes (24) des Passagiers zu beleuchten, eine Kamera (18), die von der Lichtquelle (12) mit Abstand angeordnet ist, wobei die Kamera (18) positioniert ist, ein Bild (30) des Lichts (20) aufzunehmen, das den Kopf (24) des Insassen beleuchtet, und ein Signal auszugeben, das dem Bild (30) entspricht; und **gekennzeichnet durch** einen Prozessor (16), der konfiguriert ist, das Signal zu empfangen und die Position des Kopfes (24) des Insassen relativ zu der Kamera (18) zu bestimmen, basierend auf dem beleuchteten Teil des Kopfes (24) des Insassen in dem Bild (30), so dass der Prozessor (16) eine Entfernung (2) des Kopfes (24) des Insassen von der Kamera (18) bestimmt **durch** Bestimmen einer vertikalen Position (Y) von Gesichtsmerkmalen in dem beleuchteten Teil (20) des Kopfes (24) des Insassen in dem Bild (30) und Vergleichen dieser Gesichtsmerkmale mit einem aus einer empirischen Korrelation, experimentellen Daten und einer Verweistabelle.

2. Insassenüberwachungssystem (10) gemäß Anspruch 1, wobei die zumindest eine Lichtquelle (12) eine Infrarot-Leuchtdiode ist (LED - light emitting diode).

3. Insassenüberwachungssystem (10) gemäß Anspruch 1, wobei die zumindest eine Lichtquelle (12) eine Laserdiode ist.

4. Insassenüberwachungssystem (10) gemäß Anspruch 1, wobei das Licht (20), das durch die Lichtquelle (12) erzeugt wird, durch eine horizontale Linie definiert wird, die über das Gesicht (23) eines Insassen projiziert wird.

5. Insassenüberwachungssystem (10) gemäß Anspruch 1, wobei Automobil die Fahrerseite und eine Passagierseite umfasst, wobei das Insassenüberwachungssystem (10) auf der Seite des Fahrers des Automobils positioniert ist und konfiguriert ist, die Position des Kopfes (24) eines Fahrers zu überwachen.

6. Insassenüberwachungssystem (10) gemäß Anspruch 1, wobei die Kamera (18) entlang einer ersten Achse positioniert ist und die Lichtquelle (12) entlang einer zweiten Achse positioniert ist, wobei die erste Achse in einem Winkel von zumindest 10° relativ zu der zweiten Achse positioniert ist.

7. Insassenüberwachungssystem (10) gemäß Anspruch 1, wobei das Bild (30) eine vertikale Achse und eine Querachse umfasst, wobei der Prozessor (16) konfiguriert ist, das Bild (30) zu analysieren und eine Position auf der vertikalen Achse zu bestimmen, die dem belichteten Teil des Kopfes (24) des Insassen entspricht.

8. Insassenüberwachungssystem (10) gemäß Anspruch 1, wobei der Prozessor (16) konfiguriert ist, eine Entfernung (2) zwischen der Kamera (18) und dem Kopf (24) des Insassen zu bestimmen.

9. Verfahren zum Bestimmen der Position des Kopfes (24) eines Insassen in einem Automobil, wobei das Verfahren die Schritte aufweist: Vorsehen von zumindest einer Lichtquelle (12), einer Kamera (18) und eines Prozessors (16), Betätigen der Lichtquelle (12), um einen Teil des Kopfes (24) des Insassen zu beleuchten, Betätigen der Kamera (18), um ein Bild (30) aufzunehmen, das den Kopf (24) des Insassen und den beleuchteten Teil des Kopfes (24) des Insassen umfasst, und Ausgeben eines Signals, das dem Bild (30) entspricht; und
**gekennzeichnet durch**
Bestimmen der Position des Kopfes (24) des Insassen relativ zu der Kamera basierend auf einer Position des beleuchteten Teils des Kopfes (24) des Insassen in dem Bild (30) **durch** Bestimmen einer vertikalen Position (Y) von Gesichtsmerkmalen in dem beleuchteten Teil (20) des Kopfes (24) des Insassen in dem Bild (30) und Vergleichen dieser Gesichtsmerkmale mit einem aus einer empirischen Korrelation, experimentellen Daten und einer Verweistabelle.

10. Verfahren gemäß Anspruch 9, wobei die zumindest eine Lichtquelle (12) eine aus einer Infrarot-Leuchtdiode (LED - light emitting diode) und einer Laserdiode ist.

11. Verfahren gemäß Anspruch 9, wobei die zumindest eine Lichtquelle (12) und die Kamera (18) durch den Prozessor (16) gesteuert werden.

12. Verfahren gemäß Anspruch 9, wobei die zumindest eine Lichtquelle (12) konfiguriert ist, ein sich horizontal erstreckendes Lichtband auf den Kopf (24) des Insassen zu projizieren.

13. Verfahren gemäß Anspruch 9, wobei der Prozessor (16) die Entfernung des Kopfes (24) des Insassen von der Kamera (18) bestimmt.

14. Verfahren gemäß Anspruch 9, wobei die Schritte des Betätigens der Lichtquelle (12), des Betätigens der Kamera (18) und der Bestimmung der Position des Kopfes (24) des Insassen relativ zu der Kamera (18) in einer vorgegebenen Zeitdauer wiederholt werden.

15. Verfahren gemäß Anspruch 14, wobei die vorgegebenen Zeitdauer kleiner als eine Sekunde ist.

16. Verfahren gemäß Anspruch 9, das weiter aufweist den Schritt eines Anpassens des Auslösens eines Airbags, der angrenzend an den Insassen positioniert ist, basierend auf der Position des Kopfes (24) des Insassen, die in dem vorhergehenden Schritt bestimmt wird.

**Revendications**

1. Système de surveillance d'occupant (10) pour surveiller une position de la tête d'un occupant (24) dans une automobile, le système comprenant au moins une source de lumière (12) positionnée pour fournir de la lumière (20) et éclairer une portion de la tête (24) du passager, une caméra (18) écartée de la source de lumière (12), la caméra (18) étant positionnée pour capturer une image (30) de la lumière (20) qui éclaire la tête (24) de l'occupant et délivrer un signal correspondant à l'image (30) ; et **caractérisé par**
un processeur (16) configuré pour recevoir le signal et déterminer la position de la tête (24) de l'occupant par rapport à la caméra (18) en se basant sur la partie éclairée de la tête (24) de l'occupant dans l'image (30), tel que le processeur (16) détermine une distance (2) de la tête (24) de l'occupant depuis la caméra (18) en déterminant une position verticale (Y) de caractéristiques faciales à l'intérieur de la portion éclairée (20) de la tête (24) de l'occupant dans l'image (30) et en comparant ces caractéristiques faciales soit à une corrélation empirique, soit à des données expérimentales, soit à une table de lecture.

2. Système de surveillance d'occupant (10) selon la revendication 1, dans lequel ladite au moins une source de lumière (12) est une diode électroluminescente (LED) infrarouge.

3. Système de surveillance d'occupant (10) selon la revendication 1, dans lequel ladite au moins une source de lumière (12) est une diode laser.

4. Système de surveillance d'occupant (10) selon la revendication 1, dans lequel la lumière (20) produite par la source de lumière (12) est définie par une ligne horizontale projetée à travers le visage (23) d'un occupant.

5. Système de surveillance d'occupant (10) selon la revendication 1, dans lequel ladite automobile inclut un côté conducteur et un côté passager, le système de surveillance d'occupant (10) étant positionné du côté du conducteur de l'automobile et configuré pour surveiller la position de la tête (24) d'un conducteur.

6. Système de surveillance d'occupant (10) selon la revendication 1, dans lequel la caméra (18) est positionnée le long d'un premier axe, et la source de lumière (12) est positionnée le long d'un second axe, le premier axe étant positionné à un angle égal à au moins 10° par rapport au second axe.

7. Système de surveillance d'occupant (10) selon la revendication 1, dans lequel l'image (30) inclut un axe vertical et un axe transversal, le processeur (16) étant configuré pour analyser l'image (30) et déterminer une position sur l'axe vertical en correspondance de la portion éclairée de la tête (24) de l'occupant.

8. Système de surveillance d'occupant (10) selon la revendication 1, dans lequel le processeur (16) est configuré pour déterminer une distance (2) entre la caméra (18) et la tête (24) de l'occupant.

9. Procédé pour déterminer la position de la tête (24) d'un occupant dans une automobile, le procédé incluant les étapes consistant à fournir au moins une source de lumière (12), une caméra (18), et un processeur (16), à actionner la source de lumière (12) pour éclairer une portion de la tête (24) de l'occupant, à actionner la caméra (18) pour capturer une image (30) qui inclut la tête (24) de l'occupant et la partie éclairée de la tête (24) de l'occupant, et à délivrer un signal correspondant à l'image (30) ; et **caractérisé par** les étapes consistant à
déterminer la position de la tête (24) de l'occupant par rapport à la caméra en se basant sur une position de la portion éclairée de la tête (24) de l'occupant dans l'image (30) en déterminant une position verticale (Y) de caractéristiques faciales à l'intérieur de la portion éclairée (20) de la tête (24) de l'occupant dans l'image (30) et en comparant ces caractéristiques faciales soit à une corrélation empirique, soit à des données expérimentales, soit à une table de lecture.

10. Procédé selon la revendication 9, dans lequel ladite au moins une source de lumière (12) est une diode parmi une diode électroluminescente infrarouge et une diode laser.

11. Procédé selon la revendication 9, dans lequel ladite au moins une source de lumière (12) et la caméra (18) sont commandées par le processeur (16).

EP 1 800 964 B1

**12.** Procédé selon la revendication 9, dans lequel ladite au moins une source de lumière (12) est configurée pour projeter une bande horizontale de lumière sur la tête (24) de l'occupant.

**13.** Procédé selon la revendication 9, dans lequel le processeur (16) détermine la distance de la tête (24) de l'occupant depuis la caméra (18).

**14.** Procédé selon la revendication 9, dans lequel les étapes consistant à actionner la source de lumière (12), à actionner la caméra (18), et à déterminer la position de la tête (24) de l'occupant par rapport à la caméra (18) sont répétées dans une période temporelle prédéterminée.

**15.** Procédé selon la revendication 14, dans lequel la période temporelle prédéterminée est inférieure à une seconde.

**16.** Procédé selon la revendication 9, comprenant en outre l'étape consistant à ajuster le déploiement d'un airbag positionné adjacent à l'occupant en se basant sur la position de la tête (24) de l'occupant déterminée dans l'étape précédente.

8

Fig.1.

EP 1 800 964 B1

Fig.2.

Fig.3.

Fig.4.

Fig.5.

Fig.6.

Fig.7.

Fig.8.

Fig.9.

**EP 1 800 964 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040085448 A
- EP 1033290 A2
- WO 03059697 A1
- US 20040153229 A
- US 20030079929 A